# EUROPÄISCHE PATENTSCHRIFT

(11) **EP 0 270 003 B1**
(45) Veröffentlichungstag und Bekanntmachung des Hinweises auf die Patenterteilung: **20.01.1993**
(21) Anmeldenummer: 87117471.0
(22) Anmeldetag: 26.11.1987
(51) Int. Cl.: C09B 67/22, C09B 69/04, C09B 67/26, C09B 56/06

(54) **Flüssige Schwarzfarbstoffe**
Liquid black dyes
Colorants noirs liquides

(30) Priorität: 03.12.1986 DE 3641233
(43) Veröffentlichungstag der Anmeldung: 08.06.1988
(73) Patentinhaber: BASF Aktiengesellschaft, 67063 Ludwigshafen (DE)
(72) Erfinder: Degen, Hans-Juergen, Dr., D-6143 Lorsch (DE); Bermes, Rudolf, Dr., D-6700 Ludwigshafen (DE); Pfohl, Sigberg, Dr., D-6720 Speyer (DE)

(56) Entgegenhaltungen:
- EP-A- 0 035 152
- US-A- 4 118 182

## Beschreibung

Die Erfindung betrifft flüssige wäßrige Farbstoffmischungen für Schwarznuancen, enthaltend als Farbstoffe im wesentlichen diejenigen Farbstoffe, die die C.I.-Nummer (Colour-Index-Nummer) 19 140, 40 000 oder 47 035 besitzen, in Form ihres Alkanolammoniumsalzes, sowie die Farbstoffe der Formel I, II und/oder III 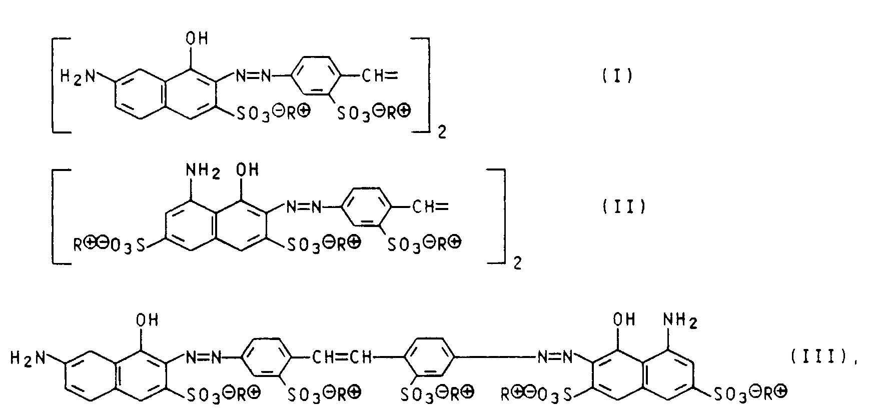
wobei die Kationen R^{⊕} gleich oder verschieden sind und jeweils unabhängig voneinander Alkanolammonium-, gegebenenfalls substituierte Ammonium- oder Alkalikationen sind und die Mengen der Einzelfarbstoffe so gewählt sind, daß sich ein Schwarz ergibt.

Die durch die Formel I, II und III wiedergegebenen Farbstoffe erhält man in an sich bekannter Weise, zweckmäßig durch gleichzeitige oder stufenweise Kupplung bis-diazotierter Flavonsäure mit 7-Amino-1-hydroxynaphthalin-3-sulfonsäure (Gamma-Säure) und 8-Amino-1-hydroxynaphthalin-3,6-disulfonsäure (H-Säure). Die genaue Zusammensetzung der Farbstoffe hängt natürlich jeweils von der Menge der verwendeten Ausgangsprodukte und der Art der Kupplung ab und kann leicht durch diese Parameter gesteuert werden. Die Kupplung kann auch in Gegenwart der Farbstoffe, die die obengenannten C.I.-Nummern besitzen, erfolgen.

Die Herstellung der Mischungskomponenten erfolgt ebenfalls nach an sich bekannten Methoden. Nähere Einzelheiten können den Beispielen entnommen werden.

Die anionischen Farbstoffe sollen zum überwiegenden Teil als Alkanolammoniumsalze voliegen, um eine genügend hohe Löslichkeit, Lagerbeständigkeit und weitgehende Geruchsfreiheit der konzentrierten Lösungen in Wasser, die in der Regel 15 bis 35 Gew.%, vorzugsweise 20 bis 30 Gew.%, jeweils bezogen auf die Lösung, an Farbstoff enthalten, zu garantieren.

Für den Fall, daß R^{⊕} ein Alkanolammoniumkation bedeutet, leitet es sich z.B. von Mono-, Di- oder Triethanolamin, Methyl-, Ethyl-, Dimethyl- oder Diethylethanolamin, Mono-, Di- oder Tripropanolamin, Mehtyl- oder Ethyldiethanolamin oder Methyl-, Ethyl-, Dimethyl- oder Diethylpropanolamin ab.

Gegebenenfalls substituierte Ammoniumionen stammen z.B. von Ammoniak, Mono-, Di- oder Trimethylamin, Mono-, Di- oder Triethylamin, Mono-, Di- oder Tripropylamin, Mono-, Di- oder Triisopropylamin oder Mono-, Di- oder Tributylamin.

Alkalikationen sind z.B. Lithium-, Natrium- oder Kaliumionen.

Die Alkalikationen werden dabei im wesentlichen durch Vorprodukte, die üblicherweise in technischem Reinheitsgrad verwendet werden, eingeschleppt. Die solchermaßen eingeschleppten Mengen an Alkalikationen sind tolerierbar, Lithiumionen auch in hohen Mengen.

Farbstoffmischungen, in denen R^{⊕} für Alkanolammoniumkationen steht, sind bevorzugt.

In der Regel beträgt das Gewichtsverhältnis zwischen den Farbstoffen, die die C.I.-Nummer 19 140, 40 000 oder 47 035 besitzen, und den Farbstoffen der Formel I, II und III 1:2 bis 1:3,5, jeweils bezogen auf die freien Farbsäuren. Die Menge der Farbstoffe der Formel I, II und III hängt vom Gewichtsverhältnis Gamma-Säure : H-Säure ab, das in der Regel zwischen 1:0 und 1:3 gewählt wird.

Gegenüber den aus der US-A-4 118 182 bekannten Schwarzmischungen weisen die erfindungsgemäßen Mischungen den Vorteil der geringeren pH-Empfindlichkeit und höheren Löslichkeit und Stabilität auf. Ferner sind sie kostengünstiger herzustellen.

Die erfindungsgemäßen Mischungen eignen sich insbesondere zum Färben von Papierstoffen sowie Leder und Lederfasermaterial. Die Färbungen auf Papier neigen dabei nicht zum Bronzieren.

Die folgenden Beispiele sollen die Erfindung näher erläutern. In ihnen beziehen sich Prozentangaben, sofern nicht anders vermerkt, auf das Gewicht.

### Beispiel 1

Zu einer Suspension von 34,6 g Sulfanilsäure in 90 g Wasser gab man im Verlauf von zwei Stunden 17,5 g 1,3-Bis-nitrosyloxy-2,2-dimethylpropan und rührte bei Raumtemperatur ungefähr eine Stunde nach. Nachdem die Diazotierung beendet war, zerstörte man einen etwaigen kleinen Nitritüberschuß mit wenig Amidosulfonsäure. Zu dieser Aufschlämmung fügte man nun 60,4 g 1-(4'-Hydroxysulfonylphenyl)pyrazol-5-on-3-carbonsäure hinzu und ließ bei einer Temperatur von etwa 5 bis 15°C 56,0 g 50 %iges Monoethanolamin in einer Stunde zutropfen. Nach beendeter Kupplung stellte man den Ansatz mit Wasser auf ein Gesamtgewicht von 370 g ein.

Mit der so erhaltenen Lösung des Farbstoffs C.I. Acid Yellow 23 mischte man 1100 g der im Beispiel 4 beschriebenen blauen Farbstofflösung. Auf diese Weise erhielt man eine konzentrierte, gebrauchsfertige Schwarzeinstellung.

### Beispiel 2

74,1 g 4,4ʹ-Diaminostilben-2,2ʹ-disulfonsäure und 300 g Wasser wurden bei Raumtemperatur verrührt und tropfenweise im Verlauf von etwa zwei Stunden mit 36,0 g 1,3-Bis-nitrosyloxy-2,2-dimethylpropan versetzt. Nach dreistündigem Rühren zerstörte man den verbliebenen Nitritüberschuß durch geringen Zusatz von Amidosulfonsäure. Die erhaltene Suspension ließ man sodann in eine aus 300 g Wasser, 95,7 g 7-Amino-1-hydroxynaphthalin-3-sulfonsäure und 182 g Triethanolamin bereitete Lösung bei 20 bis 30°C unter gutem Rühren innerhalb 30 Minuten einlaufen. Das Diazotiergefäß wurde mit 50 ml Wasser nachgespült. Nach Auflösen von 125 g Harnstoff im Reaktionsgemisch stellte man dieses durch weiteren geringen Wasserzusatz auf eine Gesamtmenge von 1250 g ein. Man erhielt so eine lagerfähige Lösung des Farbstoffs der Formel I.

Zu einer vollwertigen flüssigen Schwarzmischung gelangte man, als man die beschriebene Lösung des Farbstoffs der Formel I mit 310 g der Lösung des gelben Farbstoffs, der die C.I.-Nummer 47 035 besitzt, vermischte. Die letztere erhielt man, indem man 267 g eines Sulfiergemisches, das 51,6 g Naphthochinophthalonsulfonsäure enthielt, in 1100 Teile Wasser eingoß und nach Zusatz von 92,0 g Tri-(2-ethylhexyl)amin eine Stunde lang bei 95 bis 100°C verrührte. Nach dem Abstellen des Rührers bildete sich unter einer öligen Schicht, welche den Farbstoff enthielt, eine klare untere Phase aus verdünnter Schwefelsäure, die abgetrennt und verworfen wurde. Die ölige Schicht wurde nun nacheinander zweimal mit 450 ml und einmal mit 225 ml Wasser bei 95 bis 100°C je eine halbe Stunde lang verrührt, wonach sich das heiße Waschwasser nach dem Abstellen des Rührers zusammen mit einem Teil des eingesetzten Amins auf der Oberfläche sammelte und abgetrennt wurde.

Der verbliebene Farbstoff wurde nun mit 30 g Diethylethanolamin, 65 g 2,2-Dimethylpropandiol und 130 ml Wasser auf 95°C erhitzt, wobei der Farbstoff eine wäßrige Lösung bildete. Nachdem man vom oben sitzenden Tri-(2-ethylhexyl)amin abgetrennt hatte, stellte man die Farbstofflösung mit reinem Wasser auf eine Gesamtmenge von 310 g ein und verwendete sie unmittelbar zur Herstellung obiger Schwarzmischung.

### Beispiel 3

310 g der Lösung des gelben Farbstoffs, die gemäß der Rezeptur im zweiten Teil des Beispiels 2 erhalten wurde, wurden mit 300 ml Wasser, 95,7 g 7-Amino-1-hydroxynaphthalin-3-sulfonsäure sowie 182 g Triethanolamin versetzt und anschließend mit der durch Bisdiazotierung von 74,1 g 4,4ʹ-Diaminostilben-2,2ʹ-disulfonsäure gemäß der im ersten Teil der Beispiels 2 erläuterten Arbeitsweise erhaltenen Aufschlämmung langsam versetzt. Dabei bildete sich der durch Formel I wiedergegebene Farbstoff in Gegenwart des Farbstoffs, der die C.I.-Nummer 47 035 besitzt, und man erhielt eine gebrauchsfertige Stammlösung von schwarzem Farbton.

### Beispiel 4

Man bisdazotierte 74,1 g 4,4ʹ-Diaminostilben-2,2ʹ-disulfonsäure, wie in Beispiel 2 beschrieben. Dann vereinigte man jedoch die erhaltene Aufschlämmung des Bisdiazoniumsalzes in sonst gleicher Weise mit einer Mischung, die man aus 47,9 g 7-Amino-1-hydroxynaphthalin-3-sulfonsäure, 63,9 g 8-Amino-1-hydroxynaphthalin-3,6-disulfonsäure, 200 ml Wasser und 140 g Triethanolamin bereitet hatte und fügte 100 g Harnstoff und eine kleine Menge Wasser hinzu, um den Ansatz auf ein Endgewicht von 1000 g einzustellen. Man erhielt eine Lösung der durch die Formeln I, II und III gekennzeichneten Farbstoffe.

In einem anderen Gefäß rührte man 104,4 g 4-Nitrotoluol-2-sulfonsäure mit 630 ml Wasser und 153 g 50 %iger Natronlauge an und erwärmte fünf Stunden auf 55 bis 58°C. Nach Abkühlen auf Raumtemperatur fügte man 90,0 g Tributylamin und 280 g 50 %ige Schwefelsäure hinzu und erwärmte auf etwa 100°C. Nachdem die Mischung 15 Minuten gerührt wurde, stellte man den Rührer ab, worauf sich oben ein gelbes Öl abschied. Die untere, wäßrige Phase wurde abgetrennt und verworfen.

Zur Farbstoffphase gab man 300 ml Wasser und 63 g Diethanolamin und verrührte eine Stunde lang bei 60°C. Nach Abstellen des Rührers trennte sich an der Oberfläche eine farblose Schicht von Tributylamin ab, während sich unten eine wäßrige Lösung des gelben Farbstoffs C.I. Direct Yellow 11 abschied. Diese Lösung wurde von der farblosen Schicht abgetrennt und mit Wasser auf ein Gesamtgewicht von 540 g eingestellt.

Man vereinigte nun die Lösung dieses gelben Farbstoffes mit der Lösung der blauen Farbstoffe I, II und III und erhielt eine gebrauchsfertige Schwarzmischung.

### Beispiel 5

Zunächst stellte man eine Lösung des Farbstoffs C.I. Direct Yellow 11, wie in Beispiel 4 beschrieben, her. Zu dieser Lösung gab man sodann 200 ml Wasser, 140 g Triethanolamin, 47,9 g 7-Amino-1-hydroxynaphthalin-3-sulfonsäure, 63,9 g 8-Amino-1-hydroxynaphthalin-3,6-disulfonsäure und ließ anschließend die Suspension von 74,1 g gemäß Beispiel 2 bisdiazotierter Flavonsäure bei Raumtemperatur in etwa 30 Minuten bei guter Rührung einlaufen. Die Kupplung zu den Farbstoffen der Formel I, II und III war praktisch sofort beendet.

Schließlich fügte man noch 100 g Harnstoff und soviel Wasser hinzu, daß insgesamt 1540 g einer gebrauchsfertigen, konzentrierten Schwarzmischung erhalten wurden.

## Patentansprüche

1. Wäßrige Farbstoffmischungen für Schwarznuancen, enthaltend als Farbstoffe im wesentlichen diejenigen Farbstoffe, die die C.I.-Nummer 19 140, 40 000 oder 47 035 besitzen, in Form ihres Alkanolammoniumsalzes, sowie die Farbstoffe der Formel I, II und/oder III 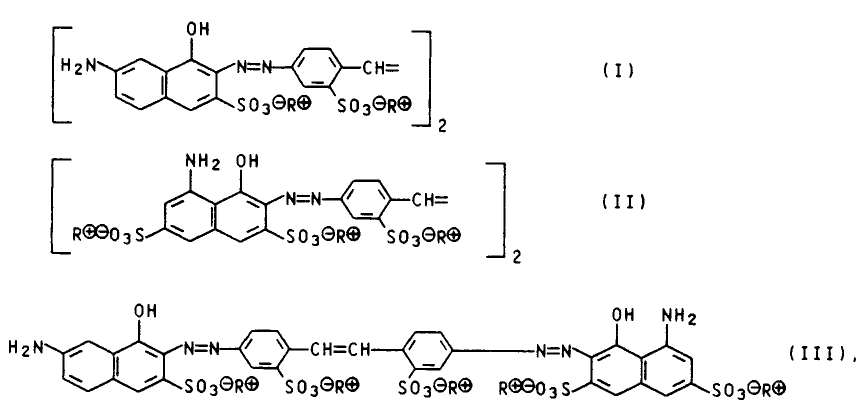 wobei die Kationen R^{⊕} gleich oder verschieden sind und jeweils unabhängig voneinander Alkanolammonium-, gegebenenfalls substituierte Ammonium- oder Alkalikationen sind und die Mengen der Einzelfarbstoffe so gewählt sind, daß sich ein Schwarz ergibt.

2. Wäßrige Farbstoffmischungen gemäß Anspruch 1, dadurch gekannzeichnet, daß R^{⊕} ein Alkanolammoniumkation bedeutet.

## Claims

1. An aqueous dye mixture for black shades, containing as dyes essentially those dyes which have the C.I. number 19,140, 40,000 or 47,035, in the form of the alkanolammonium salt, and also the dyes of the formula I, II or III 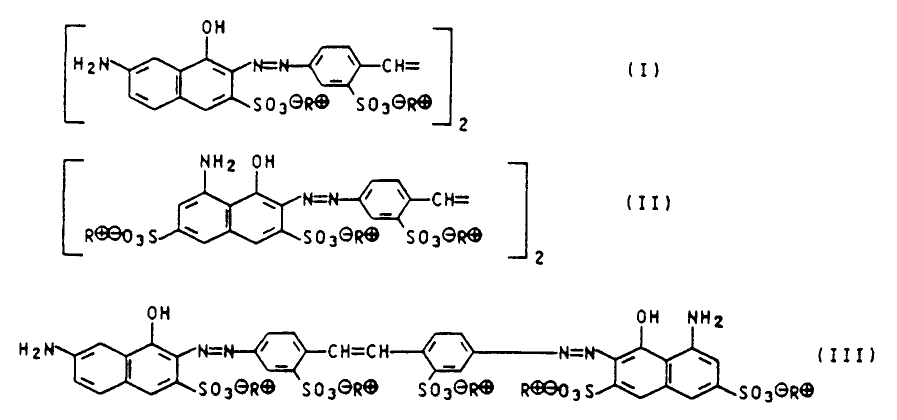 where the cations R^{⊕} are identical or different and each is independently of the others an alkanolammonium cation, a substituted or unsubstituted ammonium cation or an alkali metal cation, and the quantities of the individual dyes are such as to produce a black.

2. An aqueous dye mixture as claimed in claim 1, wherein R^{⊕} is an alkanolammonium cation.

## Revendications

1. Mélanges aqueux de colorants pour des nuances de noir, contenant essentiellement, comme colorants, ceux qui portent le numéro de C. I. 19 140, 40 000 ou 47 035, sous forme de leur sel d'alcanolammonium, ainsi que les colorants de formules I, II et/ou III 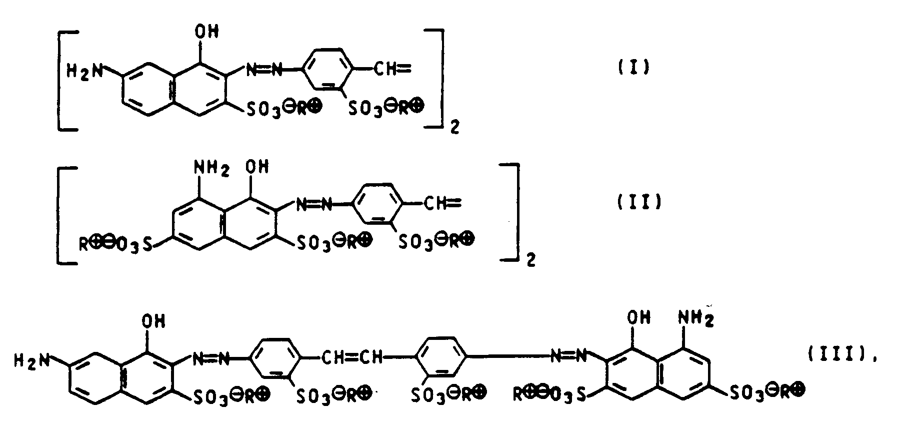 dans lesquelles les cations R⁺ sont identiques ou différents et sont chacun, independamment les uns des autres, des cations alcanolammonium ou des cations ammonium éventuellement substitues ou des cations alcalins, les quantités des colorants individuels étant choisies de sorte qu'il en resulte un noir.

2. Mélanges aqueux de colorants selon la revendication 1, caractérisés en ce que R⁺ represénte un cation alcanolammonium.
